# EUROPÄISCHE PATENTSCHRIFT

(11) **EP 4 553 590 B1**
(45) Veröffentlichungstag und Bekanntmachung des Hinweises auf die Patenterteilung: **14.10.2026**
(21) Anmeldenummer: 23209415.1
(22) Anmeldetag: 13.11.2023
(51) Int. Cl.: G05B 17/02, G05B 19/418

(54) **VERFAHREN ZUM BEREITSTELLEN EINES MIGRIERBAREN MODELLS EINER REGELUNGSFUNKTION FÜR EIN TECHNISCHES SYSTEM**
METHOD FOR PROVIDING A MIGRATING MODEL OF A REGULATION FUNCTION FOR A TECHNICAL SYSTEM
PROCÉDÉ DE PRÉPARATION D'UN MODÈLE MIGRABLE D'UNE FONCTION DE RÉGULATION POUR UN SYSTÈME TECHNIQUE

(43) Veröffentlichungstag der Anmeldung: 14.05.2025
(73) Patentinhaber: Robert Bosch GmbH, 70442 Stuttgart (DE)
(72) Erfinder: Beermann, Laura, 76337 Waldbronn (DE); Vandamme, Antoine, 70839 Gerlingen (DE)

(56) Entgegenhaltungen:
- EP-A1- 2 154 606
- WO-A1-2016/091535
- DE-A1- 102020 205 980

## Beschreibung

Die Erfindung betrifft ein Verfahren zum Bereitstellen eines migrierbaren Modells einer Regelungsfunktion für ein technisches System. Ferner betrifft die Erfindung ein Computerprogramm, eine Vorrichtung sowie ein Speichermedium zu diesem Zweck.

### Stand der Technik

Regelungsfunktionen, z. B. für Fahrzeuge oder Fertigungsanwendungen, werden meist für eine bestimmte Hardwareumgebung, mit einer bestimmten Frequenz in Abhängigkeit von der Hardware und der beabsichtigten Funktionalität entworfen.

Allerdings ist dabei insbesondere nachteilhaft, dass die Rechenleistung der Hardware vorgegeben und limitiert ist und bei einem Ausfall oder einer Störung der Hardware die Regelungsfunktion nicht mehr oder nur eingeschränkt zur Verfügung steht.

Aus der WO 2016/091535 A1 ist ein zeitdiskretes Verfahren zur Steuergeräteentwicklung für Kraftfahrzeuge bekannt.

### Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9 sowie ein computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind,
selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zum Bereitstellen eines migrierbaren Modells einer Regelungsfunktion für ein technisches System, umfassend die nachfolgenden Schritte, wobei die Schritte wiederholt und/oder nacheinander durchgeführt werden können. Unter migrierbar wird im Rahmen der vorliegenden Erfindung insbesondere verstanden, dass das Modell der Regelungsfunktion in ein anderes technisches System, bzw. eine andere Datenverarbeitungsvorrichtung, überführt werden kann und/oder auf mehreren technischen Systemen, bzw. Datenverarbeitungsvorrichtungen, implementiert werden kann. Das technische System kann beispielsweise ein Fahrzeug oder ein Fertigungssystem in einer Produktion sein. Die Regelungsfunktion kann im Beispiel des Fahrzeugs als technisches System beispielsweise eine Spurhalteregelung oder eine Abstandsregelung sein.

In einem ersten Schritt wird vorzugsweise eine Regelungsfunktion bereitgestellt, wobei die Regelungsfunktion zumindest auf Basis von Eingabedaten und einer durch das technische System vorgegebenen Frequenz wenigstens eine Ausgangsgröße ermittelt. Die Regelungsfunktion kann als ein mathematisches Modell bereitgestellt sein. Die vorgegebene Frequenz ist insbesondere für eine Taktfrequenz eines Hardwaremoduls des technischen Systems spezifisch, auf welcher die Regelungsfunktion ausgeführt wird. Das Hardwaremodul kann beispielsweise ein eingebettetes System sein. Die Eingabedaten können beispielsweise Sensordaten sein oder diese umfassen. Die Sensordaten können aus einer Erfassung wenigstens eines Sensors des technischen Systems oder beispielsweise auch aus einer Erfassung eines Sensors eines weiteren mit dem technischen System in Beziehung stehenden System resultieren. Das weitere mit dem technischen System in Beziehung stehende System kann im Falle eines Fahrzeugs als technisches System beispielsweise eine Ampel sein. Die vorgegebene Frequenz kann ferner für eine Periodizität der Regelungsfunktion spezifisch sein oder die Periodizität vorgeben oder beeinflussen. Die wenigstens eine Ausgangsgröße kann beispielsweise eine Trajektorie eines Fahrzeugs oder ein horizontaler Abstand zu einer Fahrspur oder ein Abstand zu einem voranfahrenden Fahrzeug sein.

In einem weiteren Schritt wird vorzugsweise eine stochastische Verteilung für die Eingabedaten und die vorgegebene Frequenz auf Basis von einer Charakteristik wenigstens einer Hardware definiert, auf welcher die Regelungsfunktion ausführbar ist. Vereinfacht ausgedrückt werden mit der stochastischen Verteilung für die Eingabedaten und die vorgegebene Frequenz Schwankungsbereiche angegeben, welche durch eine Implementierung auf verschiedenen möglichen Hardwareumgebungen auftreten können. Die Charakteristik ist beispielsweise eine jeweilige Taktfrequenz oder eine jeweilige Rechenleistung der Hardware. Diese Schwankungsbereiche beschreiben gemäß der Charakteristik beispielsweise auch Schwankungen durch verschiedene Arten von Verbindungsleitungen wie drahtlos oder drahtgebunden und können durch Protokolle und/oder Erfahrungswerte vorgegeben sein oder durch entsprechende Versuche bestimmt werden.

In einem weiteren Schritt wird vorzugsweise das migrierbare Modell der Regelungsfunktion auf Basis der bestimmten stochastischen Verteilung der Eingabedaten und der vorgegebenen Frequenz unter Verwendung eines Unsicherheitsquantifizierungsverfahrens ermittelt, um eine stochastische Verteilung der wenigstens einen Ausgangsgröße zu modellieren. Das Unsicherheitsquantifizierungsverfahren kann beispielsweise eins Monte-Carlo-Simulation oder ein Latin-Hypercube Sampling sein oder auf einem Chaos Polynom Ansatz basieren. Das migrierbare Modell ist somit vorzugsweise ausgebildet, um auf Basis eines bestimmten Wertes aus der stochastischen Verteilung für die Eingabedaten und für die vorgegebene Frequenz einen jeweiligen Wert, insbesondere mit einer Unsicherheitsangabe, für die wenigstens eine Ausgangsgröße zu bestimmen.

In einem weiteren Schritt wird vorzugsweise geprüft, ob die stochastische Verteilung der wenigstens einen Ausgangsgröße wenigstens eine definierte Regelungsanforderung erfüllt. Auf Basis eines Ergebnisses des Prüfens kann anschließend das migrierbare Modell der Regelungsfunktion bereitgestellt werden. Die wenigstens eine definierte Regelungsanforderung kann auf Erfahrungswerten oder auch auf Vorgaben aus Standards oder Gesetzen beruhen. Ein Beispiel wäre, dass die wenigstens eine Ausgangsgröße ein Abstand eines Fahrzeugs zu einem voranfahrenden Fahrzeug ist und geprüft wird, ob die stochastische Verteilung des Abstands über einem durch einen Standard oder ein Gesetz vorgegebenen Schwellwert liegt. Ein weiteres Beispiel wäre, dass im Falle einer Spurhalteregelung als Regelungsfunktion ein Abstand zwischen dem Fahrzeug und wenigstens einer Spur die Regelungsanforderung vorgibt.

Durch das Verfahren kann somit vorteilhaft die Regelungsfunktion in Form des migrierbaren Modells für verschiedene Hardwareumgebungen bereitgestellt werden, wodurch beispielsweise eine Auslagerung der Regelungsfunktion oder eine weitere Durchführung in einer Backup-Hardwareumgebung ermöglicht werden kann.

Vorteilhaft ist es zudem, wenn das Verfahren ferner den folgenden Schritt umfasst:
- Bereitstellen des migrierbaren Modells der Regelungsfunktion auf Basis einer Implementierung auf dem technischen System und/oder auf einer externen Datenverarbeitungsvorrichtung.

Das migrierbare Modell kann auch auf einem weiteren technischen System bereitgestellt werden. In anderen Worten wird das migrierbare Modell der Regelungsfunktion gemäß dieses Schrittes auf dem technischen System und/oder auf der externen Datenverarbeitungsvorrichtung implementiert. Die externe Datenverarbeitungsvorrichtung kann beispielsweise ein Cloud-Server, sein. Vorteilhaft kann das zusätzliche Bereitstellen des migrierbaren Modells der Regelungsfunktion auf der externen Datenverarbeitungsvorrichtung ein Backup für die Regelungsfunktion ermöglichen, d.h. eine redundante zweite Ermittlung der wenigstens einen Ausgangsgröße. Dabei kann die externe Datenverarbeitungsvorrichtung beispielsweise Zugriff auf weitere Eingabedaten haben. Im Fall, dass das technische System ein Fahrzeug ist könnte die externe Datenverarbeitungsvorrichtung beispielsweise vorteilhaft Zugriff auf Verkehrsdaten wie z.B. Ampeldaten, haben und diese als weitere Eingabedaten für das migrierbare Modell der Regelungsfunktion verwenden. Alternativ könnte das migrierbare Modell der Regelungsfunktion auch nur auf der externen Datenverarbeitungsvorrichtung implementiert und ausgeführt werden, um lediglich, beispielsweise zyklisch, einen aktuellen Wert der wenigstens einen Ausgangsgröße an das technische System zu übermitteln. So kann vorteilhaft ein Rechenaufwand in dem technischen System reduziert werden.

Des Weiteren ist es im Rahmen der Erfindung optional möglich, dass das Verfahren ferner die folgenden Schritte umfasst:
- Ausführen des implementierten migrierbaren Modells auf dem technischen System und/oder auf der externen Datenverarbeitungsvorrichtung,
- Prüfen, ob eine Ausgabe des ausgeführten migrierbaren Modells die wenigstens eine definierte Regelungsanforderung erfüllt.

Die Ausgabe ist insbesondere ein jeweiliger Wert für die wenigstens eine Ausgabegröße. Dadurch kann vorteilhaft geprüft werden, ob das migrierbare Modell für eine Anwendung auf dem technischen System und/oder auf der externen Datenverarbeitungsvorrichtung geeignet ist.

Nach einer weiteren Möglichkeit kann vorgesehen sein, dass auf Basis der Ausgabe des ausgeführten migrierbaren Modells eine Steuerung und/oder eine Regelung des technischen Systems durchgeführt wird.

Des Weiteren ist es denkbar, dass im Rahmen des Ermittelns ein migrierbares Modell in Abhängigkeit von unter anderem einer Änderung einer Frequenz einer bei einer Implementierung zugrundeliegenden Hardware ermittelt wird. Die Abhängigkeit von der Änderung der Frequenz kann als Sensitivität bezeichnet werden und drückt dabei insbesondere aus, wie stark das jeweilige migrierbare Modell auf eine Änderung der Frequenz der Hardware reagiert, auf welcher das migrierbare Modell implementiert würde.

Von weiterem Vorteil kann vorgesehen sein, dass das Ermitteln die folgenden Schritte umfasst:
- Ermitteln einer definierten Anzahl an Stichproben aus den definierten stochastischen Verteilungen für die Eingabedaten und die vorgegebene Frequenz unter Verwendung des Unsicherheitsquantifizierungsverfahrens,
- Berechnen jeweiliger Werte für die wenigstens eine Ausgangsgröße auf Basis der ermittelten definierten Anzahl an Stichproben der Eingabedaten und der vorgegebenen Frequenz.

Das Unsicherheitsquantifizierungsverfahren kann auf einem Chaos Polynom Ansatz beruhen. Hierbei wird insbesondere die Ausgangsgröße y als Polynom dargestellt, z.B. $y = {\sum }_{k = 0}^{k = K} {y}_{k} ∗ {ψ}_{k} .$ *ψₖ* sind beispielsweise bekannte statistische Verteilungen. Die Ermittlung des migrierbaren Modells für die Ausgangsgröße y umfasst dann insbesondere, die Koeffizienten *yₖ* als Funktionen der berechneten Werte dieser Ausgangsgröße zu bestimmen.

Beispielsweise kann es vorgesehen sein, dass das technische System ein Fahrzeug ist und auf Basis der migrierbaren Regelungsfunktion eine Steuerung und/oder eine Regelung einer Fahrzeugfunktion des Fahrzeugs bereitgestellt wird. Die Steuerung der Fahrzeugfunktion kann beispielsweise ein automatisches Lenken oder Bremsen sein. Es ist somit möglich, dass das erfindungsgemäße Verfahren bei einem Fahrzeug zum Einsatz kommt. Das Fahrzeug kann bspw. als ein Kraftfahrzeug und/oder Personenkraftfahrzeug und/oder autonomes Fahrzeug ausgebildet sein. Das Fahrzeug kann eine Fahrzeugeinrichtung, bspw. zur Bereitstellung einer zumindest teilautomatisierten Fahrfunktion und/oder ein Fahrerassistenzsystem aufweisen. Die Fahrzeugeinrichtung kann dazu ausgeführt sein, das Fahrzeug zumindest teilweise automatisch zu steuern und/oder zu beschleunigen und/oder abzubremsen und/oder zu lenken.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, eines technischen Systems, eines Hardwaremoduls, einer externen Datenverarbeitungsvorrichtung, einer Vorrichtung, eines Speichermediums sowie eines Computerprogramms gemäß Ausführungsbeispielen der Erfindung,
- Fig. 2: eine schematische Visualisierung eines Verfahrens gemäß Ausführungsbeispielen der Erfindung.

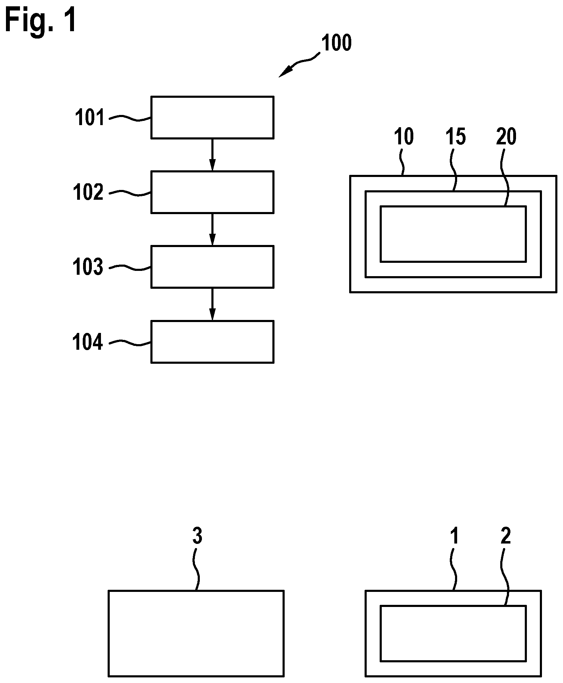

In Fig. 1 sind ein Verfahren 100, ein technisches System 1, ein Hardwaremodul 2, eine externe Datenverarbeitungsvorrichtung 3, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Bereitstellen eines migrierbaren Modells 8 einer Regelungsfunktion 4 für ein technisches System 1. In einem ersten Schritt 101 wird eine Regelungsfunktion 4 bereitgestellt, wobei die Regelungsfunktion 4 zumindest auf Basis von Eingabedaten 5 und einer durch das technische System 1 vorgegebenen Frequenz 6 wenigstens eine Ausgangsgröße 7 ermittelt, wobei die vorgegebene Frequenz 6 für eine Taktfrequenz eines Hardwaremoduls 2 des technischen Systems 1 spezifisch ist, auf welcher die Regelungsfunktion 4 ausgeführt wird. In einem zweiten Schritt 102 wird eine stochastische Verteilung für die Eingabedaten 5 und die vorgegebene Frequenz 6 auf Basis von einer Charakteristik wenigstens einer Hardware, auf welcher die Regelungsfunktion 4 ausführbar ist, definiert. In einem dritten Schritt 103 wird das migrierbare Modell 8 der Regelungsfunktion 4 auf Basis der bestimmten stochastischen Verteilung der Eingabedaten 5 und der vorgegebenen Frequenz 6 unter Verwendung eines Unsicherheitsquantifizierungsverfahrens 9 ermittelt, um eine stochastische Verteilung der wenigstens einen Ausgangsgröße 7 zu modellieren. In einem vierten Schritt 104 wird geprüft, ob die stochastische Verteilung der wenigstens einen Ausgangsgröße 7 wenigstens eine definierte Regelungsanforderung erfüllt, wobei auf Basis eines Ergebnisses des Prüfens das migrierbare Modell 8 der Regelungsfunktion 4 bereitgestellt wird.

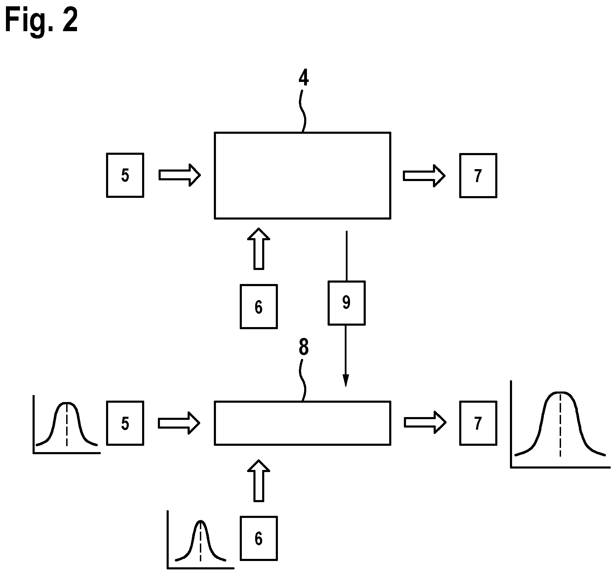

Fig. 2 zeigt eine schematische Visualisierung eines Verfahrens gemäß Ausführungsbeispielen der Erfindung. Dabei ist zunächst eine Regelungsfunktion 4 bereitgestellt, welche auf Basis von Eingabedaten 5 und einer vorgegebenen Frequenz 6 eine Ausgangsgröße 7 ermittelt. Unter Verwendung eines Unsicherheitsquantifizierungsverfahrens 9 und auf Basis einer Definition von stochastischen Verteilungen für die Eingabedaten 5 und die vorgegebene Frequenz 6 kann ein migrierbares Modell 8 ermittelt werden, um eine stochastische Verteilung der Ausgangsgröße 7 zu modellieren.

Regelungsfunktionen 4 in verteilten Systemen sollten vorzugsweise auf verschiedenen Hardwareumgebungen laufen können und einen geringen Einfluss auf eine sich ändernde Frequenz 6 der jeweiligen Hardwareumgebung haben. Für verteilte Regelungsfunktionen 4 wie eine Querschnittssteuerung oder eine Edge-gesteuerte Fertigung wäre es beispielsweise von Vorteil, einen Controller in einer Cloud oder eine ähnliche Backup-Lösung bereitzustellen.

Unsicherheitsquantifizierungsverfahren 9 (englisch: "Uncertainty Quantification methods") können gemäß Ausführungsbeispielen der Erfindung verwendet werden, um ein migrierbares Modell 8 der Regelungsfunktion 4 aus der festen Regelungsfunktion 4 unter Verwendung einer stochastischen Verteilung für Eingangsdaten und einer vorgegebenen Frequenz 6 zu ermitteln. Dieses migrierbare Modell 8 kann vorteilhaft auf unterschiedlicher Hardware mit unterschiedlichen Frequenzen 6 implementiert und ausgeführt werden. Das migrierbare Modell 8 der Regelungsfunktion 4 soll somit vorzugsweise nicht auf eine Frequenz 6 festgelegt sein, sondern sollte vorzugsweise auf mehreren verschiedenen Frequenzen 6 laufen können, insbesondere mit einer geringen Sensitivität gegenüber Frequenzänderungen. Das migrierbare Modell 8 der Regelungsfunktion 4 kann dann im Hinblick auf die stochastische Verteilung der wenigstens einen Ausgangsgröße 7 im Vergleich mit einer definierten Regelungsanforderung, d.h. insbesondere ein zulässiger Bereich, geprüft und vorzugsweise ferner auf eine Sensitivität z. B. einer Frequenzwertverteilung überprüft werden.

Fast jede komplexe Funktion benötigt insbesondere einen geschlossenen Regelkreis, um auf verschiedene Aktor- oder Sensordaten zu reagieren und/oder diese zu steuern. Wird die Regelungsfunktion 4 nicht auf einem festen, sondern auf einem verteilten System, einem flexiblen Systemaufbau (z. B. Cloud/Edge) oder einer zonalen Architektur eingesetzt, können sich die Ressourcen im Hinblick auf die Hardwareumgebung für die Regelungsfunktion 4 ändern, und es kann eine Backup-Lösung mit ähnlichen Werten für die wenigstens eine Ausgangsgröße 7 erforderlich sein.

Ein bestehendes mathematisches Modell der Regelungsfunktion 4 kann die Grundlage für die Transformation zu dem migrierbaren Modell 8 der Regelungsfunktion 4 bilden. Die Eingabedaten und die vorgegebene Frequenz 6 werden zunächst vorzugsweise als stochastische Verteilungen definiert. Die Bereiche sind beispielsweise entsprechende Umgebungsänderungen, z.B. abhängig von den Hardwareänderungen, mit denen die Regelungsfunktion 4 umgehen können soll. Das bestehende Modell der Regelungsfunktion 4 wird anschließend vorzugsweise in Kombination mit diesen stochastischen Verteilungen und unter Verwendung eines Unsicherheitsquantifizierungsverfahrens 9 (z.B. basierend auf Polynomialem Chaos) verwendet, um das migrierbare Modell 8 zu generieren. Dieses migrierbare Modell 8 berechnet vorzugsweise primär die wenigstens eine Ausgangsgröße 7 als stochastische Verteilung, kann aber auch einen Wert dieser Ausgangsgröße 7 aus einem bestimmten Frequenzwert berechnen. Die sich ergebende stochastische Verteilung der wenigstens einen Ausgangsgröße 7 kann dann gegen eine definierte Regelungsanforderung, insbesondere einen zulässigen Bereich der wenigstens einen Ausgangsgröße 7, geprüft werden, um eine Eignung festzustellen.

Eine mögliche Anwendung besteht beispielsweise darin, dieselbe Regelungsfunktion 4 auf verschiedenen Rechenplattformen, bzw. Datenverarbeitungsvorrichtungen, zu verwenden, die unterschiedliche Frequenzen 6 und möglicherweise zusätzliche Informationen bereitstellen. In einer möglichen Konfiguration kann ein Fahrzeug als technisches System 1 über eine Cloud als externe Datenverarbeitungsvorrichtung 3 gesteuert werden und es können zusätzliche Ampelinformationen abgerufen werden, auch wenn die direkte Sicht des Fahrzeugs auf die entsprechende Ampel versperrt ist.

Ein weiterer optionaler Schritt kann gemäß Ausführungsbeispielen sein, das Wissen über die dem migrierbaren Modell 8 innewohnende Sensitivität zu nutzen, um ein migrierbares Modell 8 mit geringer Sensitivität gegenüber Frequenzänderungen herauszufiltern, so dass dieses migrierbare Modell 8 weniger von den zugrunde liegenden Hardwareänderungen beeinflusst wird. Eine weitere Möglichkeit könnte sein, das migrierbare Modell 8 aus verrauschten Eingabedaten 5 und/oder Frequenzen 6 zu ermitteln, um reale Störungen zu berücksichtigen und ein funktionales Verhalten des migrierbaren Modells 8 näher an die Realität heranzuführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Bereitstellen eines migrierbaren Modells (8) einer Regelungsfunktion (4) für ein technisches System (1), umfassend die nachfolgenden Schritte:
- Bereitstellen (101) einer Regelungsfunktion (4), wobei die Regelungsfunktion (4) zumindest auf Basis von Eingabedaten (5) und einer durch das technische System (1) vorgegebenen Frequenz (6) wenigstens eine Ausgangsgröße (7) ermittelt, wobei die vorgegebene Frequenz (6) für eine Taktfrequenz eines Hardwaremoduls (2) des technischen Systems (1) spezifisch ist, auf welcher die Regelungsfunktion (4) ausgeführt wird,
- Definieren (102) einer stochastischen Verteilung für die Eingabedaten (5) und die vorgegebene Frequenz (6) auf Basis von einer Charakteristik wenigstens einer Hardware, auf welcher die Regelungsfunktion (4) ausführbar ist,
- Ermitteln (103) des migrierbaren Modells (8) der Regelungsfunktion (4) auf Basis der bestimmten stochastischen Verteilung der Eingabedaten (5) und der vorgegebenen Frequenz (6) unter Verwendung eines Unsicherheitsquantifizierungsverfahrens (9), um eine stochastische Verteilung der wenigstens einen Ausgangsgröße (7) zu modellieren,
- Prüfen (104), ob die stochastische Verteilung der wenigstens einen Ausgangsgröße (7) wenigstens eine definierte Regelungsanforderung erfüllt, wobei auf Basis eines Ergebnisses des Prüfens (104) das migrierbare Modell (8) der Regelungsfunktion (4) bereitgestellt wird.

2. Verfahren (100) nach Anspruch 1,
**dadurch gekennzeichnet,**
**dass** das Verfahren (100) ferner den folgenden Schritt umfasst:
- Bereitstellen des migrierbaren Modells (8) der Regelungsfunktion (4) auf Basis einer Implementierung auf dem technischen System (1) und/oder auf einer externen Datenverarbeitungsvorrichtung (3).

3. Verfahren (100) nach Anspruch 2,
**dadurch gekennzeichnet,**
**dass** das Verfahren (100) ferner die folgenden Schritte umfasst:
- Ausführen des implementierten migrierbaren Modells (8) auf dem technischen System (1) und/oder auf der externen Datenverarbeitungsvorrichtung (3) ,
- Prüfen, ob eine Ausgabe des ausgeführten migrierbaren Modells (8) die wenigstens eine definierte Regelungsanforderung erfüllt.

4. Verfahren (100) nach Anspruch 3,
**dadurch gekennzeichnet,**
**dass** auf Basis der Ausgabe des ausgeführten migrierbaren Modells (8) eine Steuerung und/oder eine Regelung des technischen Systems (1) durchgeführt wird.

5. Verfahren (100) nach einem der vorhergehenden Ansprüche,
**dadurch gekennzeichnet,**
**dass** im Rahmen des Ermittelns (103) ein migrierbares Modell (8) in Abhängigkeit von unter anderem einer Änderung einer Frequenz (6) einer bei einer Implementierung zugrundeliegenden Hardware ermittelt wird.

6. Verfahren (100) nach einem der vorhergehenden Ansprüche,
**dadurch gekennzeichnet,**
**dass** das Ermitteln (103) die folgenden Schritte umfasst:
- Ermitteln einer definierten Anzahl an Stichproben aus den definierten stochastischen Verteilungen für die Eingabedaten (5) und die vorgegebene Frequenz (6) unter Verwendung des Unsicherheitsquantifizierungsverfahrens (9),
- Berechnen jeweiliger Werte für die wenigstens eine Ausgangsgröße (7) auf Basis der ermittelten definierten Anzahl an Stichproben der Eingabedaten (5) und der vorgegebenen Frequenz (6).

7. Verfahren (100) nach einem der vorhergehenden Ansprüche,
**dadurch gekennzeichnet,**
**dass** das technische System (1) ein Fahrzeug ist und auf Basis des migrierbaren Modells (8) eine Steuerung und/oder eine Regelung einer Fahrzeugfunktion des Fahrzeugs bereitgestellt wird.

8. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 7 auszuführen.

## Claims

1. Method (100) for providing a migratable model (8) of a control function (4) for a technical system (1), comprising the following steps:
- providing (101) a control function (4), wherein the control function (4) determines at least one output quantity (7) at least on the basis of input data (5) and a frequency (6) predefined by the technical system (1), wherein the predefined frequency (6) is specific to a clock frequency of a hardware module (2) of the technical system (1) on which the control function (4) is executed,
- defining (102) a stochastic distribution for the input data (5) and the predefined frequency (6) on the basis of a characteristic of at least one item of hardware on which the control function (4) is able to be executed,
- determining (103) the migratable model (8) of the control function (4) on the basis of the determined stochastic distribution of the input data (5) and the predefined frequency (6) using an uncertainty quantification method (9) in order to model a stochastic distribution of the at least one output quantity (7),
- checking (104) whether the stochastic distribution of the at least one output quantity (7) meets at least one defined control requirement, wherein the migratable model (8) of the control function (4) is provided on the basis of a result of the check (104).

2. Method (100) according to Claim 1,
**characterized**
**in that** the method (100) furthermore comprises the following step:
- providing the migratable model (8) of the control function (4) on the basis of an implementation on the technical system (1) and/or on an external data processing device (3).

3. Method (100) according to Claim 2,
**characterized**
**in that** the method (100) furthermore comprises the following steps:
- executing the implemented migratable model (8) on the technical system (1) and/or on the external data processing device (3),
- checking whether an output of the executed migratable model (8) meets the at least one defined control requirement.

4. Method (100) according to Claim 3,
**characterized**
**in that** the technical system (1) is controlled and/or regulated on the basis of the output of the executed migratable model (8).

5. Method (100) according to one of the preceding claims,
**characterized**
**in that**, in the course of the determination (103), a migratable model (8) is determined depending, inter alia, on a change in a frequency (6) of an item of hardware on which the implementation is based.

6. Method (100) according to one of the preceding claims,
**characterized**
**in that** the determination (103) comprises the following steps:
- determining a defined number of samples from the defined stochastic distributions for the input data (5) and the predefined frequency (6) using the uncertainty quantification method (9),
- calculating respective values for the at least one output quantity (7) on the basis of the determined defined number of samples of the input data (5) and the predefined frequency (6).

7. Method (100) according to one of the preceding claims,
**characterized**
**in that** the technical system (1) is a vehicle and a vehicle function of the vehicle is controlled and/or regulated on the basis of the migratable model (8).

8. Computer program (20) comprising instructions that, when the computer program (20) is executed by a computer (10), cause said computer to carry out the method (100) according to one of the preceding claims.

9. Data processing device (10) configured to carry out the method (100) according to one of Claims 1 to 7.

10. Computer-readable storage medium (15) comprising instructions that, when executed by a computer (10), cause said computer to carry out the steps of the method (100) according to one of Claims 1 to 7.

## Revendications

1. Procédé (100) de préparation d'un modèle migrable (8) d'une fonction de régulation (4) pour un système technique (1), comprenant les étapes suivantes :
- préparation (101) d'une fonction de régulation (4), la fonction de régulation (4) déterminant au moins une grandeur de sortie (7) sur la base de données d'entrée (5) et d'une fréquence (6) prédéfinie par le système technique (1), la fréquence (6) prédéfinie étant spécifique d'une fréquence d'horloge d'un module matériel (2) du système technique (1) sur lequel est exécutée la fonction de régulation (4),
- définition (102) d'une distribution stochastique pour les données d'entrée (5) et la fréquence (6) prédéfinie sur la base d'une caractéristique d'au moins un matériel sur lequel peut être exécutée la fonction de régulation (4),
- détermination (103) du modèle migrable (8) de la fonction de régulation (4) sur la base de la distribution stochastique déterminée des données d'entrée (5) et de la fréquence (6) prédéfinie en utilisant un procédé de quantification d'incertitude (9) afin de modéliser une distribution stochastique de l'au moins une grandeur de sortie (7),
- vérification (104) si la distribution stochastique de l'au moins une grandeur de sortie (7) satisfait à au moins une exigence de régulation définie, le modèle migrable (8) de la fonction de régulation (4) étant préparé sur la base d'un résultat de la vérification (104).

2. Procédé (100) selon la revendication 1,
**caractérisé en ce**
**que** le procédé (100) comprend en outre l'étape suivante :
- préparation du modèle migrable (8) de la fonction de régulation (4) sur la base d'une mise en œuvre sur le système technique (1) et/ou sur un dispositif de traitement de données externe (3).

3. Procédé (100) selon la revendication 2,
**caractérisé en ce**
**que** le procédé (100) comprend en outre les étapes suivantes :
- exécution du modèle migrable (8) mis en œuvre sur le système technique (1) et/ou sur le dispositif de traitement de données externe (3),
- vérification si un produit du modèle migrable (8) exécuté satisfait à l'au moins une exigence de régulation définie.

4. Procédé (100) selon la revendication 3,
**caractérisé en ce**
**qu'**une commande et/ou une régulation du système technique (1) est effectuée sur la base du produit du modèle migrable (8) exécuté.

5. Procédé (100) selon l'une des revendications précédentes,
**caractérisé en ce**
**qu'**un modèle migrable (8) est déterminé dans le cadre de la détermination (103) en fonction, entre autres, d'une modification d'une fréquence (6) d'un matériel servant de base lors d'une mise en œuvre.

6. Procédé (100) selon l'une des revendications précédentes,
**caractérisé en ce**
**que** la détermination (103) comprend les étapes suivantes :
- détermination d'un nombre défini d'échantillons à partir des distributions stochastiques définies pour les données d'entrée (5) et la fréquence (6) prédéfinie en utilisant le procédé de quantification d'incertitude (9),
- calcul des valeurs respectives pour l'au moins une grandeur de sortie (7) sur la base du nombre défini déterminé d'échantillons des données d'entrée (5) et de la fréquence (6) prédéfinie.

7. Procédé (100) selon l'une des revendications précédentes,
**caractérisé en ce**
**que** le système technique (1) est un véhicule et, sur la base du modèle migrable (8), une commande et/ou une régulation d'une fonction de véhicule du véhicule est fournie.

8. Programme informatique (20), comprenant des instructions qui, lors de l'exécution du programme informatique (20) par un ordinateur (10), amènent celui-ci à mettre en œuvre le procédé (100) selon l'une des revendications précédentes.

9. Dispositif (10) de traitement de données, qui est conçu pour mettre en œuvre le procédé (100) selon l'une des revendications 1 à 7.

10. Support de stockage lisible par ordinateur (15), comprenant des instructions qui, lors de l'exécution par un ordinateur (10), amènent celui-ci à exécuter les étapes du procédé (100) selon l'une des revendications 1 à 7.
